# EUROPEAN PATENT APPLICATION

(11) **EP 3 315 299 A1**
(43) Date of publication of application: **02.05.2018**
(21) Application number: 17172253.1
(22) Date of filing: 22.05.2017
(51) Int. Cl.: B31D 5/00

(54) **BUBBLE BAG MANUFACTURING APPARATUS AND A BUBBLE BAG MANUFACTURING METHOD**

(30) Priority: 25.10.2016 US 201615333818
(71) Applicant: Ampacs Corporation, Taipei City 114 (TW)
(72) Inventor: LIU, Yao-Sheng, New Taipei City 221 (TW)
(74) Representative: Haseltine Lake LLP

(57) **Abstract**

A bubble bag manufacturing apparatus including a manufacturing apparatus body (100) and a wireless module (110). The manufacturing apparatus body is configured to perform a machining process on a bubble bag film roll (300), so as to manufacture a bubble bag. The bubble bag film roll comprises a machine readable medium (310). The wireless module is disposed to the manufacturing apparatus body, and configured to receive a production information of the bubble bag from an electronic apparatus (200). The electronic apparatus is configured to scan the machine readable medium to obtain the production information, and to transmit the production information to the manufacturing apparatus body by wireless transmission. The manufacturing apparatus body determines a production parameter of the bubble bag according to the production information, and manufactures the bubble bag according to the production parameter. In addition, a bubble bag manufacturing method is also provided.

## Description

### BACKGROUND OF THE INVENTION

### 1. Field of the Invention

The present invention generally relates to a manufacturing apparatus and a manufacturing method, in particular, to a bubble bag manufacturing apparatus and a bubble bag manufacturing method.

### 2. Description of Related Art

In recent years, many bubble bags are utilized to package the goods for avoiding the damage by collision, so the demand of bubble bag is increasing. Especially, the specification of the bubble bag becomes more and more diversified, resulting in the traditional bubble bag manufacturing apparatus cannot provide sufficient manufacturing capacity. Moreover, the bubble bag manufacturing apparatus often needs to arrange to the wall or the ceiling according to the demand of user, hence causing inconvenience of use. Therefore, the design of the bubble bag manufacturing apparatus capable of providing convenient operating function and a satisfactory user experience is more and more important.

### SUMMARY OF THE INVENTION

Accordingly, the present invention is directed to a bubble bag manufacturing apparatus and a bubble bag manufacturing method, capable of providing a satisfactory user experience.

The invention provides a bubble bag manufacturing apparatus. The bubble bag manufacturing apparatus includes a manufacturing apparatus body and a wireless module. The manufacturing apparatus body is configured to perform a machining process on a bubble bag film roll, so as to manufacture a bubble bag. The bubble bag film roll comprises a machine readable medium. The wireless module is disposed to the manufacturing apparatus body, and configured to receive a production information of the bubble bag from an electronic apparatus. The electronic apparatus scans the machine readable medium to obtain the production information, and transmits the production information to the manufacturing apparatus body by wireless transmission. The manufacturing apparatus body determines a production parameter of the bubble bag according to the production information, and manufactures the bubble bag according to the production parameter.

In an exemplary embodiment of the invention, the machine readable medium is an one dimensional barcode or a two dimensional barcode.

In an exemplary embodiment of the invention, wherein the manufacturing apparatus body includes a controller, a motor, a blower and a heater. The controller is coupled to the wireless module to receive the production information of the bubble bag. The controller determines the production parameter of the bubble bag according to the production information, so as to control the motor, the blower and the heater according to the production parameter to perform the machining process.

In an exemplary embodiment of the invention, the blower is configured to perform a blowing operation on the bubble bag film roll according to a blow rate of the production parameter.

In an exemplary embodiment of the invention, the heater is configured to perform a sealing operation on the bubble bag film roll according to a heating rate of the production parameter.

In an exemplary embodiment of the invention, the controller is further configured to record a manufacturing history of the bubble bag, so as to provide an information of the manufacturing history to the electronic through the wireless module. The information of the manufacturing history includes a manufacturing information of the bubble bag, or a setting information and an operating information of the bubble bag manufacturing apparatus.

In an exemplary embodiment of the invention, the manufacturing apparatus body further includes a plurality of rotating wheels. The plurality of rotating wheels is configured to form a delivery path. The controller controls a rotating speed of the motor by a digital control manner. The motor drives at least one of the plurality of rotating wheels, so as to sequentially deliver a plurality of bubble bag films of the bubble bag film roll through the delivery path.

In an exemplary embodiment of the invention, at least one of plurality of rotating wheels includes a sensor. The sensor is coupled to the controller. The sensor is configured to sense whether the delivery path occurs a breakaway event of the bubble bag film roll in the machining process, so that the controller transmits a warning signal to the electronic apparatus through the wireless module.

In an exemplary embodiment of the invention, at least one of the plurality of the rollers includes a sensor, and the sensor is coupled to the controller. The sensor is configured to calculate a depletion distance of the bubble bag film roll, so as to provide an information of the depletion distance to the electronic apparatus through the wireless module. The electronic apparatus counts a usage period of the bubble bag manufacturing apparatus, so as to provide a usage condition of the bubble bag film roll according to the depletion distance of the bubble bag film roll and the usage period of the bubble bag manufacturing apparatus.

The invention provides a bubble bag manufacturing method. The bubble bag manufacturing method is adapted to a bubble bag manufacturing apparatus. The bubble bag manufacturing method includes: scanning a machine readable medium of a bubble bag film roll by an electronic apparatus, so that the electronic apparatus obtains a production information of a bubble bag; receiving the production information from the electronic apparatus through wireless transmission; determining a production parameter of the bubble bag according to the production information; and performing a machining process on the bubble bag film roll, so as to manufacture the bubble bag according to the production parameter.

In an exemplary embodiment of the invention, the step of performing a machining process on the bubble bag film roll, so as to manufacture the bubble bag according to the production parameter includes: performing a blowing operation on the bubble bag film roll according to a blow rate of the production parameter.

In an exemplary embodiment of the invention, the step of performing a machining process on the bubble bag film roll, so as to manufacture the bubble bag according to the production parameter includes: performing a sealing operation on the bubble bag film roll according to a heating rate of the production parameter.

In an exemplary embodiment of the invention, the bubble bag manufacturing method further includes: recording a manufacturing history of the bubble bag, and providing an information of the manufacturing history to the electronic apparatus by the wireless transmission. The information of the manufacturing history includes a manufacturing information of the bubble bag, and a setting information and an operating information of the bubble bag manufacturing apparatus.

In an exemplary embodiment of the invention, the bubble bag manufacturing method further includes: sensing whether the delivery path occurs a breakaway event of the bubble bag film roll in the machining process, so as to transmit a warning signal to the electronic apparatus by wireless transmission.

In an exemplary embodiment of the invention, the bubble bag manufacturing method further includes: calculating a depletion distance of the bubble bag film roll, so as to provide an information of the depletion distance to the electronic apparatus by wireless transmission, wherein the electronic apparatus counts a usage period of the bubble bag manufacturing apparatus, so as to provide a usage condition of the bubble bag film roll according to the depletion distance of the bubble bag film roll and the usage period of the bubble bag manufacturing apparatus.

According to the above descriptions, in the exemplary embodiments of the invention, the user of the bubble bag manufacturing apparatus may utilize the electronic apparatus to obtain the production information of the bubble bag, and transmits the production information to the bubble bag manufacturing apparatus by wireless transmission. Therefore, the user may remote control the manufacturing apparatus body to manufacture the bubble bag according to the production information.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
Fig. 1 illustrates a block schematic diagram of bubble bag manufacturing apparatus according to an embodiment of the invention.
FIG. 2 illustrates a circuit schematic diagram of bubble bag manufacturing apparatus according to an embodiment of the invention.
FIG. 3 illustrates a schematic diagram of manufacturing apparatus body according to an embodiment of the invention.
FIG. 4 illustrates a schematic diagram of bubble bag film roll according to an embodiment of the invention.
FIG. 5 illustrates a flowchart of bubble bag manufacturing method according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Embodiments are provided below to describe the present disclosure in detail, though the present disclosure is not limited to the provided embodiments, and the provided embodiments can be suitably combined. The term "coupling/coupled" used in this specification (including claims) of the present application may refer to any direct or indirect connection means. For example, "a first device is coupled to a second device" should be interpreted as "the first device is directly connected to the second device" or "the first device is indirectly connected to the second device through other devices or connection means." In addition, the term "signal" can refer to a current, a voltage, a charge, a temperature, data, electromagnetic wave or any one or multiple signals.

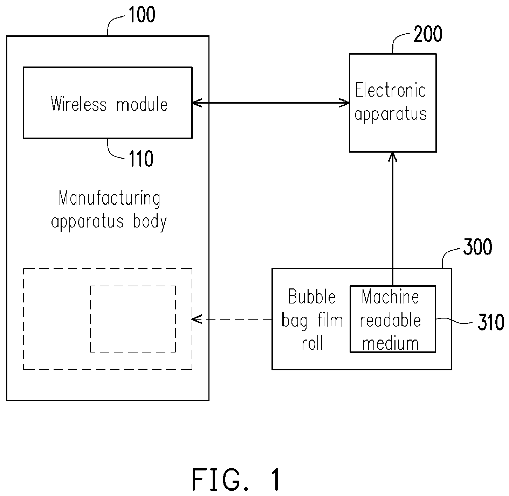

Fig. 1 illustrates a block schematic diagram of bubble bag manufacturing apparatus according to an embodiment of the invention. Referring to FIG. 1, a bubble bag manufacturing apparatus includes a manufacturing apparatus body 100 and a wireless module 110, wherein the wireless module 110 is disposed to the manufacturing apparatus body 100. The manufacturing apparatus body 100 of the bubble bag manufacturing apparatus is configured to perform a machining process on a bubble bag film roll 300, so as to manufacture a bubble bag. In the present embodiment, the bubble bag film roll 310 includes a machine readable medium 310, so that an electronic apparatus 200 can scan the machine readable medium 310 to obtain a production information of the bubble bag.

In the present embodiment, the electronic apparatus 200 transmits the production information to the wireless module 110 by wireless transmission, so that the manufacturing apparatus body 100 determines a production parameter of the bubble bag according to the production information. Therefore, the manufacturing apparatus body 100 determines a production parameter of the bubble bag according to the production information, and manufactures the bubble bag according to the production parameter. In the present embodiment, the production information may relate to at least one production feature of the bubble bag film roll 300, for example, the production information may include a film thickness, a material feature, an amount of the bubble bag film, etc.

To be specific, when the bubble bag film roll 300 is not yet arranged to the manufacturing apparatus body 100, a user may utilize the electronic apparatus 200 to previously scan the machine readable medium 310 of the bubble bag film roll 300, so as to obtain the production information of the bubble bag before performing the machining process. And then, if the bubble bag film roll 300 is arranged to the manufacturing apparatus body 100, and the user is ready to operate the bubble bag manufacturing apparatus to perform the machining process on the bubble bag film roll 300, the user may transmit the production information to the manufacturing apparatus body 100 through the electronic apparatus 200, so as to remote control the manufacturing apparatus body 100 to perform the machining process on a bubble bag film roll 300. That is to say, the user no needs to actual contact the manufacturing apparatus body 100 to perform the control operation. The user may utilize the electronic apparatus 200 to transmit the production information to the manufacturing apparatus body 100 by wireless transmission, so that the manufacturing apparatus body 100 may determines a production parameter of the bubble bag according to the production information. Therefore, the user may remote control the bubble bag manufacturing apparatus to manufacture the bubble bag within the range of wireless transmission.

In the present embodiment, the wireless module 110 provides a function of Bluetooth wireless data transmission, so that the bubble bag manufacturing apparatus can communicate with and exchange data with the electronic apparatus 200 through the wireless module 110. The wireless module 110 may include an antenna and a radio module configured to employ the antenna to transmit and receive a Bluetooth communication signal. However, in one embodiment, the wireless module 110 may also be, for example, a wireless module supporting wireless communication standards such as Bluetooth, wireless fidelity (WiFi), worldwide interoperability for microwave access (WiMax), near field communication (NFC), long term evolution (LTE), etc., the present invention is not limited thereto.

In the present embodiment, the electronic apparatus 200 is, for example, a smart phone, a smart pad, a computer, a workstation, a laptop, a tablet PC, a personal digital assistants (PDA), etc. In the present embodiment, the electronic apparatus 200 may provide a scan function, so as to scan the machine readable medium 310. In one embodiment, the electronic apparatus 200 may further include memory unit to storage a list of the production information of the bubble bag, so that the electronic apparatus 200 may provide the production information of the bubble bag corresponding to the machine readable medium 310 through scanning the machine readable medium 310. Even, the electronic apparatus 200 may previously storage the plurality of production parameters of the bubble bag, so as to directly transmit the production parameter corresponding to the production information to the manufacturing apparatus body.

In addition, in the present embodiment, the machine readable medium 310 may be an one dimensional barcode or a two dimensional barcode. It should be notice that, the user or a manufacturer of bubble bag film roll 300 may design the machine readable medium 310 according to the production feature of the bubble bag film roll 300.

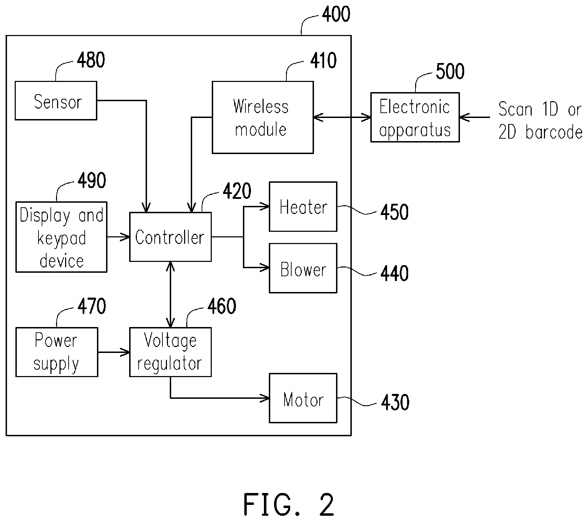

Fig. 2 illustrates a circuit schematic diagram of bubble bag manufacturing apparatus according to an embodiment of the invention. Referring to FIG. 2, a manufacturing apparatus body 400 of a bubble bag manufacturing apparatus may include a wireless module 410, a controller 420, a motor 430, a blower 440 and a heater 450. The controller 420 is coupled to the motor 430, the blower 440 and the heater 450. In the present embodiment, the controller 420 may receive a production information of the bubble bag through the wireless module 410, and determines a production parameter of the bubble bag according to the production information, so as to control the motor 430, the blower 440 and the heater 450 according to the production parameter to perform a machining process on a bubble bag film roll. In the present embodiment, the controller 420 includes, for example, Central Processing Unit (CPU), Microprocessor, Digital Signal Processor (DSP), Programmable Controller, Programmable Logic Device (PLD), or other similar devices, a combination of the said devices, which are not particularly limited by the present invention.

Moreover, the manufacturing apparatus body 400 further include a voltage regulator 460 and a power supply unit 470, and the power supply unit 470 is coupled to the voltage regulator 460. In the present embodiment, the voltage regulator 460 is further coupled to the controller 420 and the motor 430, so that the controller 420 controls the voltage regulator 460 to provide a driving voltage to the motor 430.

In the present embodiment, the production parameter may include a parameter of a blowing rate and a heating rate. The machining process may include a blowing operation and a sealing operation. To be specific, in the present embodiment, a first step of the machining process is the blowing operation. The controller 420 may control the blower 440 according to the production parameter to perform a blowing operation on each bubble bag film of the bubble bag film roll, so that each bubble bag film through the blower 440 will be filled with air. And then, a second step of the machining process is the sealing operation. In the present embodiment, the bubble bag film may be a plastic material. The controller 420 may control the heater 450 according to the production parameter to perform a sealing operation on each bubble bag film full of air, so that each of the bubble bag film full of air through the heater 450 will be sealed and becomes a bubble bag.

Besides, the production parameter may further include a manufacturing time, a manufacturing speed, and so on. In the present invention, the controller 420 may determine the production parameter according to the production information. However, the electronic apparatus 500 may also directly provide the production parameter to the controller 420 through the wireless module 410, so that the controller 420 may control the motor 430, the blower 440 and the heater 450 according to the production parameter providing from the electronic apparatus 500.

In one embodiment, the controller 420 may further configure to record a manufacturing history of the bubble bag, wherein the information of the manufacturing history may include a manufacturing information of the bubble bag, or a setting information and an operating information of the bubble bag manufacturing apparatus. The operating information may be an operating information of single bubble bag or an accumulating information of the machining process. For example, the manufacturing history may include above the blowing rate and the heating rate, and may further include information relating a manufacturing quantity of the bubble bag, a thickness of the bubble bag film, a size of the bubble bag film, and so on. That is to say, the bubble bag manufacturing apparatus may provide a feedback to the electronic apparatus 500 by wireless transmission, so that the user may obtain the manufacturing history of the bubble bag manufactured by the manufacturing apparatus body 400 through the electronic apparatus 500.

In addition, in one embodiment, the manufacturing apparatus body 400 may further include a display and keypad device 490, which the display and keypad device 490 may be implemented by using any type of display and keypad device in this field. The display and keypad device 490 may provide a display function of and input function. The invention is not intended to limit the type of the display and keypad device 490. Therefore, the display and keypad device 490 and implementation thereof can be understood sufficiently from the teaching, suggestion, and illustration of the common knowledge of this field. Thus, details thereof are not repeated hereinafter.

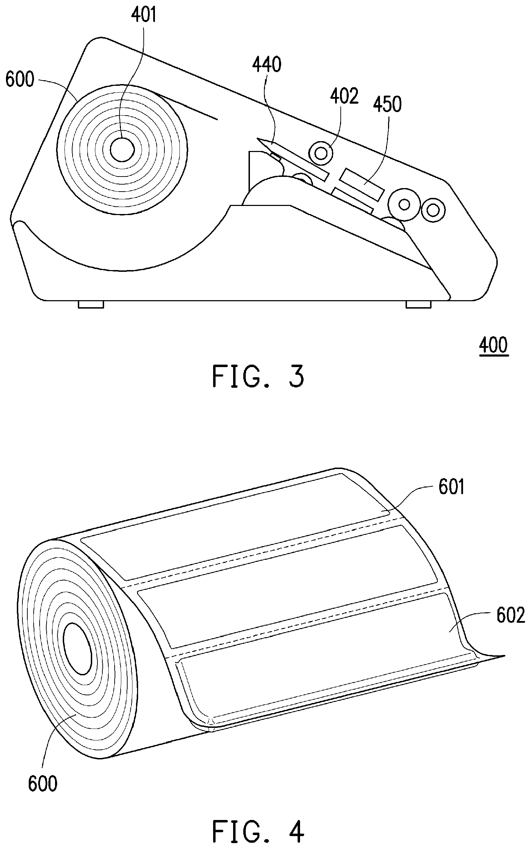

FIG. 3 illustrates a schematic diagram of manufacturing apparatus body according to an embodiment of the invention. FIG. 4 illustrates a schematic diagram of bubble bag film roll according to an embodiment of the invention. Referring to FIG. 2, FIG. 3 and FIG. 4, the manufacturing apparatus body 400 further includes a rotating shaft 401 and a plurality of rotating wheels 402. The bubble bag film roll 600 is arranged to the rotating shaft 401, and the plurality of rotating wheels 402 is configured to form a delivery path. In the present embodiment, the motor 430 is configured to drive the rotating shaft 401 and at least one of the plurality of rotating wheels 402, so that the plurality of rollers form a delivery path. The controller 420 may control the rotating speed of the motor 430 according to the production information or the demand of the user. In the present embodiment, the motor 430 may be a DC motor. The controller 420 may further include a digital signal processor (DSP), so as to control the rotating speed of the motor 430 by a digital control manner. Therefore, a delivery speed of the machining process may be determined by the production information or the demand of the user. In addition, referring to FIG. 4, the bubble bag film roll 600 includes a plurality of bubble bag films 601, and the bubble bag films 601 may become a bubble bag 602 by the machining process.

In the present embodiment, at least one of the plurality of rotating wheels 402 may include a sensor 480. The sensor 480 is coupled to the controller 420, and configured to sense whether the delivery path occurs a breakaway event of the bubble bag film in the machining process, so that the controller 420 transmits a warning signal to the electronic apparatus 500 through the wireless module 410. That is to say, the user may remote receive the warning signal of the breakaway event, so as to find the breakaway event of the bubble bag film roll 600 and to solve it.

It should be noticed that, in the present embodiment, the sensor 480 may be a light sensor, and configured to sense whether the at least one of the plurality of rotating wheels 402 stops rotating, so as to judge whether the bubble bag film roll 600 is breakaway from the at least one of the plurality of rotating wheels 402. Or, the sensor 480 sense whether the bubble bag film roll 600 is stuck, so that the at least one of the plurality of rotating wheels 402 stops rotating. The controller 420 may provide a warn signal to the electronic apparatus 500 according to the sensing result of the sensor 480.

In one embodiment, the sensor 480 may further configure to calculate a depletion distance of the bubble bag film roll 600, so as to provide an information of the depletion distance to the electronic apparatus 500 through the wireless module 410. The sensor 480 may sense a number of the rotation of the at least one of the plurality of rotating wheels 402. The number of the rotation represents a usage amount of the of the plurality of bubble bag film of the bubble bag film roll 600, so the controller 420 may calculate the depletion distance according to the number of the rotation. That is to say, the user may remote receive the information of the depletion distance, so as to know a depletion condition of the bubble bag film roll 600. Moreover, the electronic apparatus may count a usage period of the bubble bag manufacturing apparatus, so as to provide the usage condition of the bubble bag film roll according to the depletion distance of the bubble bag film roll and the usage period of the bubble bag manufacturing apparatus. Besides, the manufacturing apparatus body, the electronic apparatus and the bubble bag film roll described in the present embodiment of the invention is sufficiently taught, suggested, and embodied in the embodiments illustrated in FIG. 1, and therefore no further description is provided herein.

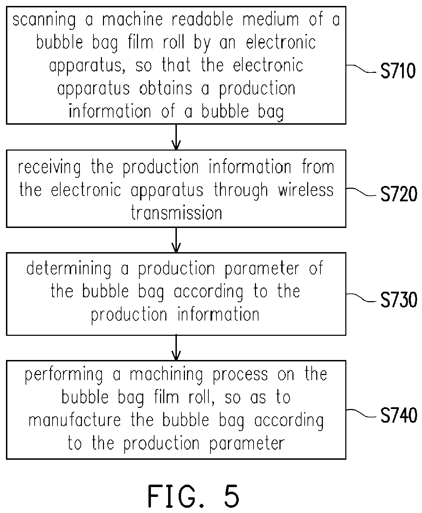

FIG. 5 illustrates a flowchart of bubble bag manufacturing method according to an embodiment of the invention. Referring to FIG. 1, the bubble bag manufacturing method is at least adapted to the manufacturing apparatus body 100, the wireless module 110, the electronic apparatus 200 and the bubble bag film roll 300 in FIG. 1, but the invention is not limited thereto. The bubble bag manufacturing method at least includes the following steps. In step S710, the electronic apparatus 200 scans a machine readable medium 310 of a bubble bag film roll 300, so that the electronic apparatus obtains a production information of a bubble bag. In step S720, the manufacturing apparatus body 100 utilizes the wireless module 110 to receive the production information from the electronic apparatus 200 through wireless transmission. In step S730, the manufacturing apparatus body 100 determines a production parameter of the bubble bag according to the production information. In step S740, when the bubble bag film roll 300 is arranged to the manufacturing apparatus body 100, the manufacturing apparatus body 100 performs a machining process on the bubble bag film roll 300, so as to manufacture the bubble bag according to the production parameter.

Besides, the manufacturing apparatus body, the electronic apparatus and the bubble bag film roll described in the present embodiment of the invention is sufficiently taught, suggested, and embodied in the embodiments illustrated in FIG. 1 to FIG. 4, and therefore no further description is provided herein.

In summary, in the exemplary embodiment of the invention, before manufacturing the bubble bag, the user can previously scan the machine readable medium of the bubble bag film roll by the electronic apparatus, so as to obtain the production information of the bubble bag. And then, the user can utilize the electronic apparatus to remote control the bubble bag manufacturing apparatus, so as to set the manufacturing apparatus body to perform the machining process on the bubble bag film roll. Moreover, the bubble bag manufacturing apparatus can record the manufacturing history and sense whether the delivery path occurs a breakaway event of the bubble bag film roll in the machining process. Accordingly, the bubble bag manufacturing apparatus of the exemplary embodiments of the invention may provide a satisfactory user experience.

## Claims

1. A bubble bag manufacturing apparatus, comprising:
a manufacturing apparatus body (100, 400), configured to perform a machining process on a bubble bag film roll (300, 600), so as to manufacture a bubble bag (602), and the bubble bag film roll (300, 600) comprises a machine readable medium (310); and
a wireless module (110, 410), disposed to the manufacturing apparatus body (100, 400), and configured to receive a production information of the bubble bag (602) from an electronic apparatus (200, 500),
wherein the electronic apparatus (200, 500) scans the machine readable medium (310) to obtain the production information, and transmits the production information to the manufacturing apparatus body (100, 400) by wireless transmission, so that the manufacturing apparatus body (100, 400) determines a production parameter of the bubble bag (602) according to the production information, and manufactures the bubble bag (602) according to the production parameter.

2. The bubble bag manufacturing apparatus according to claim 1, wherein the machine readable medium (310) is an one dimensional barcode or a two dimensional barcode.

3. The bubble bag manufacturing apparatus according to claim 1, wherein the manufacturing apparatus body (100, 400) comprises a controller (420), a motor (430), a blower (440) and a heater (450),
wherein the controller (420) is coupled to the wireless module (110, 410) to receive the production information of the bubble bag (602), and determines the production parameter of the bubble bag (602) according to the production information, so as to control the motor (430), the blower (440) and the heater (450) according to the production parameter to perform the machining process.

4. The bubble bag manufacturing apparatus according to claim 3, wherein the blower (440) is configured to perform a blowing operation on the bubble bag film roll (300, 600) according to a blow rate of the production parameter.

5. The bubble bag manufacturing apparatus according to claim 3, wherein the heater (450) is configured to perform a sealing operation on the bubble bag film roll (300, 600) according to a heating rate of the production parameter.

6. The bubble bag manufacturing apparatus according to claim 3, wherein the controller (420) is further configured to record a manufacturing history of the bubble bag (602), so as to provide an information of the manufacturing history to the electronic through the wireless module (110, 410), wherein the information of the manufacturing history comprises a manufacturing information of the bubble bag (602), or a setting information and an operating information of the bubble bag manufacturing apparatus.

7. The bubble bag manufacturing apparatus according to claim 3, wherein the manufacturing apparatus body (100, 400) further comprises a plurality of rotating wheels (402), and the plurality of rotating wheels (402) is configured to form a delivery path,
wherein the controller (420) controls a rotating speed of the motor (430) by a digital control manner, and the motor (430) drives at least one of the plurality of rotating wheels (402), so as to sequentially deliver a plurality of bubble bag films (601) of the bubble bag film roll (300, 600) through the delivery path.

8. The bubble bag manufacturing apparatus according to claim 7, wherein at least one of plurality of rotating wheels (402) comprises a sensor (480), and the sensor (480) is coupled to the controller (420),
wherein the sensor (480) is configured to sense whether the delivery path occurs a breakaway event of the bubble bag film roll (300, 600) in the machining process, so that the controller (420) transmits a warning signal to the electronic apparatus (200, 500) through the wireless module (110, 410).

9. The bubble bag manufacturing apparatus according to claim 7, wherein at least one of the plurality of the rollers comprises a sensor (480), and the sensor (480) is coupled to the controller (420),
wherein the sensor (480) is configured to calculate a depletion distance of the bubble bag film roll (300, 600), so as to provide an information of the depletion distance to the electronic apparatus (200, 500) through the wireless module (110, 410),
wherein the electronic apparatus (200, 500) counts a usage period of the bubble bag manufacturing apparatus, so as to provide a usage condition of the bubble bag film roll (300, 600) according to the depletion distance of the bubble bag film roll (300, 600) and the usage period of the bubble bag manufacturing apparatus.

10. A bubble bag manufacturing method, adapted to a bubble bag manufacturing apparatus, wherein the bubble bag manufacturing method comprising:
scanning a machine readable medium (310) of a bubble bag film roll (300, 600) by an electronic apparatus (200, 500), so that the electronic apparatus (200, 500) obtains a production information of a bubble bag (602);
receiving the production information from the electronic apparatus (200, 500) through wireless transmission;
determining a production parameter of the bubble bag (602) according to the production information; and
performing a machining process on the bubble bag film roll (300, 600), so as to manufacture the bubble bag (602) according to the production parameter.

11. The bubble bag manufacturing method according to claim 10, wherein the step of performing a machining process on the bubble bag film roll (300, 600), so as to manufacture the bubble bag (602) according to the production parameter comprises:
performing a blowing operation on the bubble bag film roll (300, 600) according to a blow rate of the production parameter.

12. The bubble bag manufacturing method according to claim 10, wherein the step of performing a machining process on the bubble bag film roll (300, 600), so as to manufacture the bubble bag (602) according to the production parameter comprises:
performing a sealing operation on the bubble bag film roll (300, 600) according to a heating rate of the production parameter.

13. The bubble bag manufacturing method according to claim 10, further comprising:
recording a manufacturing history of the bubble bag (602), and providing an information of the manufacturing history to the electronic apparatus (200, 500) by the wireless transmission, wherein the information of the manufacturing history comprises a manufacturing information of the bubble bag (602), and a setting information and an operating information of the bubble bag manufacturing apparatus.

14. The bubble bag manufacturing method according to claim 10, further comprising:
sensing whether the delivery path occurs a breakaway event of the bubble bag film roll (300, 600) in the machining process, so as to transmit a warning signal to the electronic apparatus (200, 500) by wireless transmission.

15. The bubble bag manufacturing method according to claim 10, further comprising:
calculating a depletion distance of the bubble bag film roll (300, 600), so as to provide an information of the depletion distance to the electronic apparatus (200, 500) by wireless transmission, wherein the electronic apparatus (200, 500) counts a usage period of the bubble bag manufacturing apparatus, so as to provide a usage condition of the bubble bag film roll (300, 600) according to the depletion distance of the bubble bag film roll (300, 600) and the usage period of the bubble bag manufacturing apparatus.
